# EUROPEAN PATENT SPECIFICATION

(11) **EP 3 644 147 B1**
(45) Date of publication and mention of the grant of the patent: **17.11.2021**
(21) Application number: 19204226.5
(22) Date of filing: 21.10.2019
(51) Int. Cl.: G05B 19/042, G05B 19/401, F16H 57/01

(54) **BELT DRIVE SYSTEM AND METHOD**
RIEMENANTRIEBSSYSTEM UND -VERFAHREN
SYSTÈME ET PROCÉDÉ D'ENTRAÎNEMENT PAR COURROIE

(30) Priority: 23.10.2018 EP 18202035
(43) Date of publication of application: 29.04.2020
(73) Proprietor: Roche Diagnostics GmbH, 68305 Mannheim (DE); F. Hoffmann-La Roche AG, 4070 Basel (CH)
(72) Inventor: Berberich, Walter, 71322 Waiblingen (DE); Ziegler, Timo, 71322 Waiblingen (DE); Zoelch, Benjamin, 71322 Waiblingen (DE)
(74) Representative: Lohe, Hans-Jörg

(56) References cited:
- WO-A1-2013/113764
- DE-A1- 3 904 017
- DE-A1-102004 041 411

## Description

### Technical field

Embodiments of the invention refer to a belt drive system.

### Related art

Belt drive systems to transport devices or holders for devices or tools on the belt or to drive an axis of a manipulator are known in the art.

WO2016/177883 discloses a belt drive with a belt and pulleys each equipped with a mark. The belt and a pulley are positioned with respect to one another in such a manner that, as the belt revolves around the pulley the marks of the pulley and of the belt are directly opposite in a triggering position. The triggering position is detected by means of a monitoring device. The monitoring device emits a signal if the marks are in the triggering position. The number of signals triggered over a particular recent period is detected. The load to which the belt or the pulleys has been exposed during the recent period is determined on the basis of the number of triggered signals corresponding to the number of revolutions of the belt and taking into account relevant influencing variables.

WO2018/059755 discloses a method for monitoring a drive belt in a belt drive machine, in particular in a belt drive of an agricultural machine, in which in a recording device associated with the machine one or more sensors, testing devices or pickup devices are provided by means of which measurement data representing an operating state of the machine, of the belt drive and/or an operating state or physical, geometric state of the drive belt inside the belt drive are collected.

WO2013/113764 discloses a monitoring system for a conveyor of articles. The conveyor of articles comprises a static portion and at least one respective endless transport chain. The system includes a reference element located on the transport chain, a first sensor integral with the static portion and a second sensor integral with the static portion. The system further comprises computing means configured to determine the transport chain movement speed with respect to the static portion and the length of the chain based on the signals of the first and second sensors.

De 10 2004 041 411 A1 discloses a linear motion device for a movable body having a drive system, a driving pulley connected to the drive system and a freewheel pulley and a belt mounted on the pulleys. The belt comprises a measuring element. The movable body is connected to the belt. At least one measuring device registers the measuring element to monitor the position of the movable body.

DE 39 04 017 A1 discloses a monitoring device for a belt drive. The belt drive transmits with an endless belt the torque of a motor to a driven shaft. The belt comprises along its longitudinal direction scannable marks which have an equal distance to each other. Two scan devices scan the scannable marks. A signal evaluation system determines a time relation of the signals of the two scan devices depending on the velocity of the belt and the distance of the two scan devices, to determine an elongation of the belt.

### Summary

An object of the invention is to provide an advanced belt drive system which is easy to use and reliable.

This is realized by a system according to claim 1 and a method according to claim 13.

A first aspect of the present invention concerns a belt drive system, for driving a belt, comprising a frame, a driving shaft connected to a motor, a controller, a driven shaft, and two pulleys connected to the driven shaft and the driving shaft respectively, and a belt. The frame supports the driving shaft and driven shaft so that the belt is mounted on the pulleys. One signal element is mounted on the belt so that the signal element drives with the belt. At least two detection elements are mounted at the frame so that the signal element can pass by the detection elements to generate a signal by passing by when the belt moves. The belt drive system is connected to a gripper. The detector elements are connected to the controller. The controller is adapted to control the motor so that in a starting operation of the belt drive system the belt moves until the signal element generates a signal in a first detector element of the at least two detector elements to fix a zero point in space of the belt movement. The zero point in space detected by the first detection element provides a reference point in space for the longitudinal movement of the belt. So the controller can translate the rotational movement of the motor into a longitudinal movement of the belt. This position corresponds to a park position of the gripper. During normal operation this park position will not be reached, i.e. during normal operation the signal element will not pass by the first detector element. The second detector element is placed in the belt drive system so that the signal element passes by during normal operation of the belt and provides a signal to the controller to check the zero point in space. The controller is adapted to receive and use the signal of the second detector element to check the zero point in space during normal operation of the belt drive.

A belt can be a V-belt, a multi-groove belt, a ribbed belt a timing belt such as a toothed, notch, cog or synchronous belt, or even a chain. The belt is usually made out of rubber or polymer. If needed some reinforcement fibers such as cotton, polyamide, metal or even aramid are embedded in the rubber or polymer.

The used pulleys are chosen respectively to the chosen belt to transfer the torque to the belt in an optimized or desired way.

The motor can be any kind of gear motor or directly connected motor in particular electric motor such as asynchronous, synchronous or step-motor.

The frame is usually some kind of support or even housing of the machine the belt drive is used for. Commonly sheets or rods of metal are used to design and define an appropriate working area. For instance, for a gripping device usually some kind of sorting area or hand over areas to grip and release any kind of device need to be reached by the gripper.

The controller can be realized directly as the motor controller, or as a separate part. The controller can also be part or realized in a higher level machine or even process controller depending on the application of the belt drive system. As a controller any electronic device or part of electronic device capable of realizing the required tasks is possible such as a microcontroller, FPGA, industry or personal computer, or even realized as a cloud application with wireless connected devices. It is also possible that the herein described functionalities of the controller are distributed over several electronic devices or sub-controllers.

Part of the controller is some kind of rotary encoder in particular an absolute encoder to control the longitudinal movement/displacement of the belt by controlling the rotation of the motor.

The rotary movement controlled by the controller with the rotary encoder needs to be translated into the longitudinal movement of the belt movement. To do so the belt drive system uses the zero point in space detected by the first detection element when the signal element passes by. This is the case during initialization of the belt drive system after switch on. One single point in space is sufficient because the geometry of the belt drive system is known.

The belt drive system is connected to a gripper for gripping a device.

As a connection between the controller and the connected devices in particular the motor and the first and second detector elements any kind of data transmission system is possible such as a field bus, wireless connection such as WIFI, 3G, 4G or 5G or simply metal wires can be used.

In a further embodiment the controller can send the received detector signals or directly the zero point in space to the controller to correct the motion of the belt.

Another aspect of the invention is a belt drive system, wherein the controller or the further controller is adapted to automatically correct the zero point in space, if the signal of the second detector indicates a difference to the expected zero point in space.

The controller is adapted to store the zero point in space as a reference point for the longitudinal movement of the belt to transform the rotational movement known to the controller by the rotational encoder of the motor into a longitudinal distance. The controller is adapted to receive the zero point in space, detected by the first or second detector element. The controller is adapted to compare the received zero point in space with a stored zero point in space in a memory device of the controller and store the currently received zero point in space as a reference point if a deviation of the stored and received zero point in space is detected by the controller.

A further aspect of the inventive belt drive system the controller is adapted to count the number of deviations of the zero point and to send out a message to a human interactive device when the number exceeds a threshold value.

A further aspect of the invention is a belt drive system, wherein the controller is adapted to determine the distance of deviation and sum up this absolute distance in particular separately depending on the direction of motion and to send out a message to a human interface device when the sum of the deviations exceeds a specified threshold value.

In another embodiment of the inventive belt drive system the controller is adapted to determine the number of deviations and the distance of deviation and the time between the occurrence of deviations and to send out a message to a human interface device when the time between the occurrence of deviations with a specified distance fall below a threshold value. Another aspect of the belt drive system is a database, wherein the database is connected to the controller and adapted to save the number of the occurrence of deviations, the time between the occurrence of deviations and the distance of deviation. The belt drive system further comprises an interface adapted to add parameters of the drive system into the database, in particular of the bearings, shafts, frame elements and/or the used belt after being stripped down form the pulleys. The belt is investigated with respect to one or more of the parameters of the list of: wear, elasticity, elongation at break, tensile strength. The controller is further adapted to calculate an optimized maintenance point in time taking into account the data stored in the database.

The database and or controller can be parts of a laboratory automation system. In addition, or alternatively the database can be realized as a cloud-application or as a database installed at the manufacturer of the belt drive system. Also a simple text file can be used to store the data.

A further aspect of the invention is realized in a belt drive system wherein the controller is adapted to allocate specific damages of the bearings, shafts, frame elements and/or the belt to specific values of the occurrence of deviations, the time between the occurrence of deviations and the distance of deviation, and to send out a message to a human interface device which damage is to be expected.

This is in particular realized by machine learning, in particular self-learning algorithm.

A further aspect of the invention is a belt drive system wherein the belt is a toothed belt and the pulleys are gear wheels.

In another embodiment of the invention the signal element is an optical element, a magnetic element, an inductive element, a capacitive element or a mechanical element and wherein the at least two detector elements are optical detectors, magnetic detectors, inductive detectors, capacitive detectors or mechanical detectors respectively.

Another aspect of the invention is a belt drive system wherein the signal element is an optical opaque sheet and the detector elements are photoelectric barriers. The signal element and the detectors are arranged with respect to each other so that the sheet interrupts the light beam of the photoelectric barrier when passing by.

In another embodiment of the invention the optical opaque sheet comprises a recess so that the light barrier of the photoelectric barrier can pass the recess when the signal elements passes the detector elements. This has the advantage that independent of the direction the belt movement a position of the belt can be determined.

A further aspect of the invention is a belt drive system wherein the second detector element is arranged with respect to the signal element so that the signal element passes the second detector element during at least 30% or at least 50% or at least 70% or at least 90% of all expected movements from start to stop of the belt.

This is especially advantageous when the zero position dedicated to the first detector element is also used as a safety position. The safety position is automatically ordered when the machine the belt drive system is used in needs to get in a safe state for user interaction or occurrence of an error.

An additional aspect of the invention is a method to monitor a belt drive system. The belt drive system comprises a frame, a driving shaft connected to a motor, a controller, a driven shaft, and two pulleys connected to the driven shaft and driving shaft respectively, and a belt. The frame supports the driving shaft and driven shaft so that the belt is mounted on the pulleys. One signal element is mounted on the belt so that the signal element drives with the belt. At least two detection elements are mounted at the frame so that the signal element can pass by the detection elements to generate a signal by passing by. The detector elements are connected to the controller, wherein the controller controls the motor so that in a starting operation of the belt drive system the belt moves until the signal element generates a signal in a first detector element of the at least two detector elements to fix a zero point in space of the belt motion which in particular corresponds to a park position of the belt drive. The signal of the second detector element is used to check the zero point in space during normal operation of the belt drive. During normal operation the signal element does not pass by the first detector element.

A further aspect of the inventive method is that the controller automatically corrects the zero point, if the signal of the second detector indicates a difference to the expected zero point.

An additional aspect of the inventive method is that the controller deviates from the signal of the second detector one or more parameter of the list of: number of deviations, distance of deviations, time interval of deviations wherein the controller determines a severity of the deviation using these parameters.

However, other embodiments are feasible which relates to a combination of features disclosed herewith.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
Fig. 1 is a schematic side view of a first embodiment of the invention;
Fig 2 is a front view another embodiment of the invention;
Fig. 3 is a top view of the signal element of the embodiment shown in Fig. 2; and
Fig 4 shows a further embodiment with the belt drive system shown in Fig. 1.

### Detailed description of the embodiments

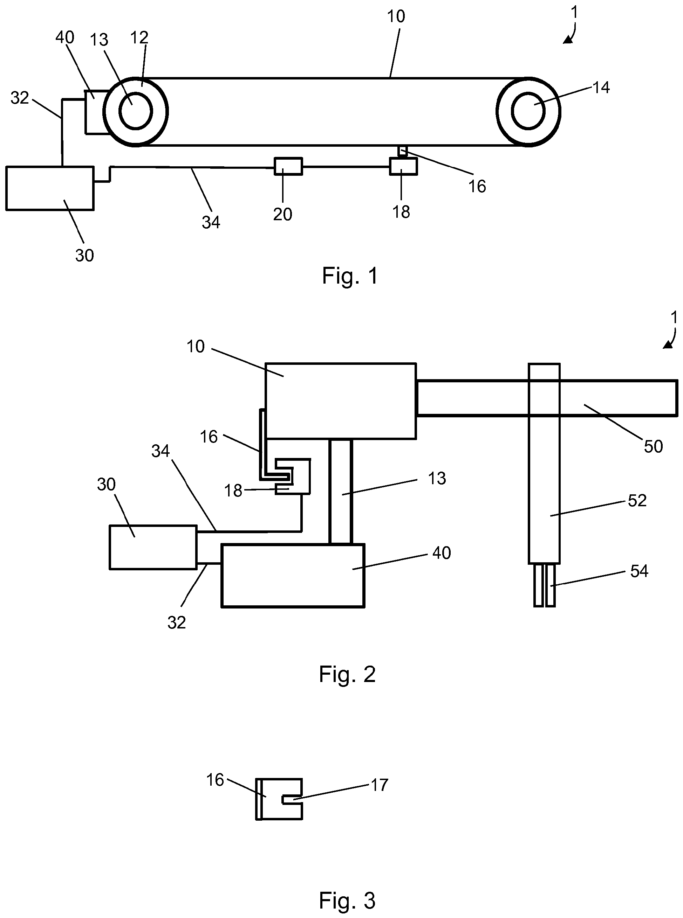

Figures 1 show a first embodiment of the invention in a schematic way. A belt 10 is mounted on two pulleys 12. One pulley 12 is driven by a driving shaft 13. The other one is hold by a driven shaft 14. The frame which supports these shafts is not shown. A motor 40 is connected to the driving shaft. A controller 30 is connected to the motor or in particular to a motor controller of the motor via a motor bus 32. The motor bus allows to send instruction signals or correction signals to the motor controller to drive the motor 40 and hence the belt 10 in the desired position.

The belt 10 can be a V-belt, a multi-groove belt, a ribbed belt a timing belt such as a toothed, notch, cog or synchronous belt, or even a chain. The belt 10 is usually made out of rubber or polymer. If needed some reinforcement fibers such as cotton, polyamide, metal or even aramid are embedded in the rubber or polymer. Known respective devices to keep the chosen belt under suspension are not shown in Figure 1.

On the belt 10 is mounted a signal element 16, which can move with the belt 10. The signal element 16 could also be included in the belt 10 by molding, gluing, or form or press fitting in a recess of the belt 10.

At a distance from the belt 10 along its elongation are placed a first detector element 18 and a second detector element 20. The distance between belt and first and second detector elements 18, 20 are chosen so that the signal element 16 generates a signal in the first and second detector element when passing by. These combinations of signal elements and detector elements can be based on magnetic, electric, optical or even mechanical effects, such as a permanent magnet and a Hall-sensor, a metal sheet and a capacitor or an inductive coil, an opaque element and a light barrier, or a mechanical rigid element which can activate a mechanical switch when passing by.

The first and second detector elements 18, 20 are connected to the controller 30 via a sensor bus 34. The sensor bus 34 and the motor bus 32 can be realized as a standard field bus such as e.g. INTERBUS, PROFIBUS, TCNet, Ether CAT, or also as wireless signal connections. They can also be realized as one single communication network.

In the embodiment shown in Fig. 1 the first detector element 18 is used to determine a zero point in space of the belt movement by moving the belt until the signal element 16 passes by the first detector element 18 to generate a signal which is send to the controller 30 via the signal bus 34. This is always done when the drive belt system is switched on to provide the controller 30 with the zero point in space of the belt movement and afterwards calculate all desired movements of the belt from this point. The zero point in space can also be used for a safety position if an error occurs in the belt drive system 1 itself or in its relevant environment.

During usual usage of the belt drive system 1 it is possible that the signal element 16 will never pass again the first detector element 18 before switch of or restart of the system. Therefore, a second detector element 20 is placed at a position where it can be foreseen that the signal element 16 will pass by the second detector element 20 in at least 30% or at least 40 % or at least 50 % or at least 60 % or at least 70% or at least 80% or at least 90% or always during usual operation of the belt drive system 1 for its dedicated purpose.

The distance between the first and second detector element 18, 20 is fixed and known by the controller 30. Therefore, a second point in space of the belt movement is fixed which is used to monitor the belt movement. If the signal of the second detector element 20 does not fit with the expected belt movement, the controller 30 detects a misalignment event will send respective correction signals to the motor 40 to correct the movement of the belt 10 to the real point in space relative to the corrected zero point in space of the belt movement.

Furthermore, the controller 30 can comprise or can be connected to a database to store these misalignment events. In the database the time of occurrence, the distance of misalignment and the frequency of occurrence of these events is stored. Based on these events the controller 30 can send out a message to a human interface device in signal connection to the controller 30 depending on predefined threshold values of e.g. a maximum distance of misalignment, a minimum time between the occurrence of two events or a maximum frequency of the occurrence of the events. Further combinations of these parameters are possible, e.g. by weighting the events with the distance of the misalignment.

Once a message to a human interface device was initiated a service technician will investigate the belt drive system 1 to identify the reason of the event. A reason could be the lost elasticity of the belt 10, the lost suspension of the suspension device to keep the belt 10 under suspension or its malfunctioning due to misalignment or broken parts, malfunction of bearings or misalignment or bending of frame elements or shafts 13, 14. Once the reason of the event was identified the technician can input via an input device this reason into the database. This reason will then be correlated to the misalignment history related to the specific event. This will be used for future events to directly link a specific event history to the reason related to this history in the past.

In a further step the controller 30 will control and check the misalignment event histories in the database and compare these histories to the currently ongoing misalignment events happened to correlate the currently happening misalignment events to a specific reason and to send a message to a human interface device in advance to avoid machine downtime at an undesired time slot and/or to prevent sudden machine downtime. Furthermore, maintenance time can be preserved if it is required and not in a fixed time schedule.

Figure 2 shows a schematic front view of belt drive system 1 used in a three axis gripping device for a gripper 54. The belt drive system 1 shown provides movement in the axis out and in of the figure plane. A second axis drive system 50 provides for movement of the gripper 54 in the second axis and a third axis drive system 52 provides for movement of the gripper 54 in a third axis.

The gripper 54 comprises two or more fingers to grip any kind of device such as e.g. packages, electronic circuit elements or tube filled with a biological liquid in a diagnostics laboratory. Further applications of the gripper 54 are possible.

The drive systems for the gripper 54 are also arranged in an appropriate frame above some kind of working area to grip and place devices not shown in Fig. 2.

If the gripping device is switched off the gripper is parked in a park-position, which is usually at a position where the gripper 54 is positioned near the driving shaft or driven shaft. If the gripping device is switched on the rotational movement of the motor 40 needs to be synchronized to the movement of the gripper 54. Therefore, the first detector element 18 is placed such that when the gripper 54 is moved out of its park-position into the working area the signal element 16 will path by the first detector element or the signal element 16 is in the position besides the first detector element 18 to generate a signal in the first detector element 18 when the gripper 54 is in its park position. The motor 40 comprises a rotation control system such as a rotary encoder. When the gripping device is switched on, the signal of the first detector element is used to synchronize the rotational movement of the motor 40 with the longitudinal movement of the gripper with the belt 10, so that the signal of the rotary encoder corresponds to the position in space of the belt 10 and hence of the gripper 54 along this axis. Therefore, the first detector element and the signal element define a zero point in space for the movement of the belt and hence of the movement of the gripper 54 along the respective axis.

After switch on during normal operation usually the gripper 54 moves such that the park-position will not be reached anymore. Therefore, the gripping device comprise a second detector element 20 placed in the gripping device, so that the signal element 16 passes by the second detector element 20 during said normal operation. The signal of the first detector element is used for initialization of the gripping device to determine the zero point in space after switch on and to drive the gripper 54 into the park-position. The signal of the second detector device 20 is used during normal operation of the gripper 54 to check the zero pint in space and to recalibrate the signal encoder signal of the motor 40 if necessary.

The signal element 16 is an opaque element e.g. a metal sheet and the first and second detector elements 18, 20 are realized as light barriers. The signal element is fixed to the belt 10. The second detector element is hidden behind the first detector element 18 in this view of Fig. 2. The controller 30 provides for the same functionalities as in the embodiment of Fig. 1.

The controller is connected via the signal bus 34 to the detector elements and via motor bus 32 to the motor. The controller 30 can also be part of the motor 40 or its functionalities can directly be realized by a motor controller of the motor 40.

Fig. 3 shows a top view of the signal element 16 of the embodiment shown in Fig. 2. Here the signal element 16 is an L-shaped sheet. One arm of the L-shaped sheet is fixed to the belt 10 and the other arm serves as the interrupting element for the light barrier. The interrupting element comprises a recess 17. This allows for more precise positioning of the belt drive independent of the moving direction of the belt. This is advantageous for the misalignment event detection as described above especially for the determination of the misalignment distance.

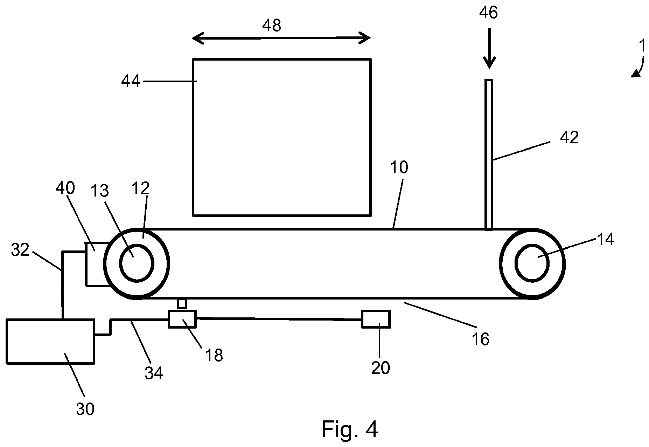

Fig. 4 shows a further embodiment with the belt drive system 1 shown in Fig. 1. In this embodiment a handling device 42 is fixed to the belt. The handling device 42 is used to handle elements in a handling area 44. For instance, the handling device 42 can be a gripper 54 as shown in Fig. 2. The gripper 54 can then be used to handle, e.g. sort tubes filled with a biological fluid in a diagnostic laboratory tube sorter in the handling area.

If the belt drive system 1 is switched of or an emergency or error occurs the handling device 42 is parked in a park position 46 which corresponds to the position when the signal element passes by the first detector element 18. A signal is generated and sent to the controller 30 so that a zero point in space is detected of the longitudinal movement of the belt and hence of the handling device. The controller 30 can control the motor 40 with its rotation encoder to drive the belt and hence the handling device to a required longitudinal position. During normal operation of the handling device 42 operating in the handling area 44 the belt's 10 longitudinal movement and hence the handling device's 42 longitudinal movement is restricted to a longitudinal region 48. When the handling device moves in this longitudinal region 48 during normal operation fulfilling its purpose the signal element will never pass by the first detector element 18. The second detector element 20 is placed so that the signal element 16 generates a signal in the second detector element 20 to fix and check a zero point in space for the movement of the belt 10 and the handling device 42.
- 1: belt drive system
- 10: belt
- 12: pulley
- 13: driving shaft
- 14: driven shaft
- 16: signal element
- 17: recess
- 18: first detector element
- 20: second detector element
- 30: controller
- 32: motor bus
- 34: sensor bus
- 40: motor
- 42: handling device
- 44: handling area
- 46: park position
- 48: longitudinal region
- 50: second axis drive system
- 52: third axis drive system
- 54: gripper

## Claims

1. A belt drive system, for driving a belt (10), comprising a frame, a driving shaft (13) connected to a motor (40), a controller (30), a driven shaft (14), and two pulleys (12) connected to the driven shaft(14) and driving shaft(13) respectively, a gripper, and a belt (10),
wherein the frame supports the driving shaft (13) and driven (14) shaft so that the belt (10) is mounted on the pulleys (12), wherein one signal element(16) is mounted on the belt (10) so that the signal element (16) moves with the belt (10), wherein at least two detection elements (18,20) are mounted at known positions at the frame so that the signal element (16) can pass by the detection elements(18,20) to generate a signal by passing by, wherein the detector elements (18,20) are connected to the controller (30), wherein the belt drive system is connected to a gripper, wherein the controller (30) is adapted to control the motor (40) characterized so that in a starting operation of the belt drive system the belt (10) is configured to move until the signal element generates a signal in a first detector element (18) of the at least two detector elements to fix a zero point in space of the belt movement which determines a reference point in space corresponding to a park position of the gripper, so that. during normal operation, the signal element will not pass by the first detector element, wherein the controller (30) is adapted to receive and use the signal of a second detector element (20) to check the zero point in space during normal operation of the belt drive system, wherein the controller (30) is adapted to automatically correct the movement of the belt (10) to the real point in space relative to the corrected zero point in space, if the signal of the second detector element (20) indicates a difference to the expected zero point in space.

2. A belt drive system according to the preceding claim, wherein the controller (30) is adapted to count the number of deviations of the zero point and to send out a message to a human interactive device when the number exceeds a threshold value.

3. A belt drive system according to the preceding claims, wherein the controller (30) is adapted to determine distances of deviation and sum up the distances and to send out a message to a human interface device when the sum of the deviations exceeds a specified threshold value.

4. A belt drive system according to the preceding claims, wherein the controller (30) is adapted to determine the number of deviations and the distance of deviation and the time between the occurrence of deviations and to send out a message to a human interface device when the time between the occurrence of deviations with a specified distance fall below a threshold value.

5. A belt drive system according to claim 4 comprising a database, wherein the database is connected to the controller (30) to save the number of the occurrences of the deviations, the time between the occurrence of deviations and the distance of deviation, wherein the belt drive system further comprises an interface adapted to add parameters of the drive system into the database, in particular of the bearings, shafts, frame elements and/or the used belt after being stripped down form the pulleys and investigated with respect to one or more of the parameters of the list of: wear, elasticity, elongation at break, tensile strength, wherein the controller (30) is adapted to calculate an optimized maintenance point in time taking into account the data stored in the database.

6. A belt drive system according to the preceding claim, wherein the controller (30) is adapted to allocate specific damages of the belt (10) to specific values of the occurrence of deviations, the time between the occurrence of deviations and the distance of deviation, and to send out a message to a human interface device which damage is to be expected.

7. A belt drive system according to the preceding claims wherein the belt (10) is a toothed belt and the pulleys (12) are gear wheels.

8. A belt drive system as claimed in the preceding claims, wherein the signal element (16) is an optical element, a magnetic element, an inductive element, a capacitive element or a mechanical element and wherein the at least two detector elements (18,20) are optical detectors, magnetic detectors, inductive detectors, capacitive detectors or mechanical detectors respectively.

9. A belt drive system according to claims 1 to 8 wherein the signal element (16) is an optical opaque sheet and the detector elements are photoelectric barriers wherein the signal element (16) and the detectors are arranged with respect to each other so that the sheet interrupts the light beam of the respective photoelectric barrier when passing by.

10. A belt drive system (1) according to claim 9 wherein the optical opaque sheet comprises a recess so that the light barrier of the photoelectric barrier can pass the recess when the signal elements (16) passes the detector elements (18,20).

11. A belt drive system (1) according to the preceding claims, wherein the second detector element (20) is arranged with respect to the signal element so that the signal element passes the second detector element during at least 30% or at least 50% or at least 70% or at least 90% of all expected movements from a start to a stop of the belt (10).

12. A three axis gripping device comprising a belt drive system (1) according to the preceding claims, wherein the belt drive system (1) provides movement in the axis out and in of a plane wherein a second axis drive system (50) provides for movement of the gripper (54) in the second axis and a third axis drive system (52) provides for movement of the gripper (54) in a third axis.

13. A method to monitor a belt drive system (1), connected to a gripper, wherein the belt drive system (1) comprises a frame, a driving shaft connected to a motor, a controller, a driven shaft, and two pulleys connected to the driven shaft and driving shaft respectively, and a belt, wherein the frame supports the driving shaft and driven shaft so that the belt is mounted on the pulleys, wherein one signal element is mounted on the belt so that the signal element drives with the belt, wherein at least two detection elements are mounted at the frame so that the signal element can pass by the detection elements to generate a signal by passing by, wherein the detector elements are connected to the controller, wherein the controller controls the motor so that in a starting operation of the belt drive system (1) the belt moves until the signal element generates a signal in a first detector element of the at least two detector elements to fix a zero point in space of the belt motion which determines a reference point in space corresponding to a park position of the gripper, wherein the signal of a second detector element is used to check the zero point in space during normal operation of the belt drive, wherein during normal operation the signal element will not pass by the first detector element, wherein the controller automatically corrects the movement of the belt (10) to the real point in space relative to the corrected zero point in space, if the signal of the second detector indicates a difference to the expected zero point in space.

14. A method according to the preceding claim, wherein the controller deviates from the signal of the second detector one or more parameter of the list of: number of deviations, distance of deviations, time interval of deviations wherein the controller determines a severity of the deviation using these parameters.

## Patentansprüche

1. Riemenantriebssystem zum Antreiben eines Riemens (10), umfassend einen Rahmen, eine Antriebswelle (13), die mit einem Motor (40) verbunden ist, eine Steuerung (30), eine Abtriebswelle (14) und zwei Rollen (12), die mit der Abtriebswelle (14) bzw.
Antriebswelle (13) verbunden sind, einen Greifer und einen Riemen (10),
wobei der Rahmen die Antriebswelle (13) und Abtriebswelle (14) so trägt, dass der Riemen (10) an den Rollen (12) angebracht ist, wobei ein Signalelement (16) so an dem Riemen (10) angebracht ist, dass sich das Signalelement (16) mit dem Riemen (10) bewegt, wobei mindestens zwei Detektorelemente (18,20) an bekannten Positionen so an dem Rahmen angebracht sind, dass das Signalelement (16) die Detektorelemente (18,20) passieren kann, wodurch ein Signal durch das Passieren erzeugt wird, wobei die Detektorelemente (18,20) mit der Steuerung (30) verbunden sind,
wobei das Riemenantriebssystem mit einem Greifer verbunden ist, wobei die Steuerung (30) dafür ausgelegt ist, den Motor (40) zu steuern,
**dadurch gekennzeichnet, dass**
der Riemen (10) bei einem Startbetrieb des Riemenantriebssystems dafür ausgebildet ist, sich zu bewegen, bis das Signalelement ein Signal in einem ersten Detektorelement (18) von den mindestens zwei Detektorelementen erzeugt, um einen Raumnullpunkt der Riemenbewegung festzulegen, der einen Raumreferenzpunk bestimmt, der einer Parkposition des Greifers entspricht, sodass das Signalelement während eines normalen Betriebes das erste Detektorelement nicht passieren wird, wobei die Steuerung (30) dafür ausgelegt ist, das Signal eines zweiten Detektorelements (20) zu empfangen und zu verwenden, um den Raumnullpunkt während eines normalen Betriebes des Riemenantriebssystems zu überprüfen, wobei die Steuerung (30) dafür ausgelegt ist, die Bewegung des Riemens (10) automatisch auf den realen Raumpunkt relativ zu dem korrigierten Raumnullpunkt zu korrigieren, wenn das Signal des zweiten Detektorelements (20) eine Differenz zu dem erwarteten Raumnullpunkt angibt.

2. Riemenantriebssystem nach dem vorstehenden Anspruch, wobei die Steuerung (30) dafür ausgelegt ist, die Anzahl an Abweichungen des Nullpunktes zu zählen und eine Nachricht an eine mit dem Menschen interagierende Vorrichtung zu senden, wenn die Anzahl einen Schwellenwert überschreitet.

3. Riemenantriebssystem nach den vorstehenden Ansprüchen, wobei die Steuerung (30) dafür ausgelegt ist, Abstände von Abweichungen zu bestimmen und die Abstände zu summieren und eine Nachricht an eine Human Interface Device zu senden, wenn die Summe der Abweichungen einen festgelegten Schwellenwert überschreitet.

4. Riemenantriebssystem nach den vorstehenden Ansprüchen, wobei die Steuerung (30) dafür ausgelegt ist, die Anzahl an Abweichungen und den Abstand einer Abweichung und die Zeit zwischen dem Auftreten von Abweichungen zu bestimmen und eine Nachricht an eine Human Interface Device zu senden, wenn die Zeit zwischen dem Auftreten von Abweichungen mit einem festgelegten Abstand unter einen Schwellenwert fällt.

5. Riemenantriebssystem nach Anspruch 4, umfassend eine Datenbank, wobei die Datenbank mit der Steuerung (30) verbunden ist, um die Anzahl des Auftretens von Abweichungen, die Zeit zwischen dem Auftreten von Abweichungen und den Abstand einer Abweichung zu speichern, wobei das Riemenantriebssystem ferner eine Schnittstelle umfasst, die dafür ausgelegt ist, der Datenbank Parameter des Antriebssystems zuzuführen, insbesondere der Lager, Wellen, Rahmenelemente und/oder des verwendeten Riemens, nachdem er von den Rollen abgezogen und in Bezug auf einen oder mehrere der Parameter aus der Liste der Folgenden untersucht worden ist: Verschleiß, Elastizität, Bruchdehnung, Zugspannung, wobei die Steuerung (30) dafür ausgelegt ist, unter Berücksichtigung der in der Datenbank gespeicherten Daten einen optimierten Wartungszeitpunkt zu berechnen.

6. Riemenantriebssystem nach dem vorstehenden Anspruch, wobei die Steuerung (30) dafür ausgelegt ist, bestimmte Beschädigungen des Riemens (10) bestimmten Werten des Auftretens von Abweichungen, der Zeit zwischen dem Auftreten von Abweichungen und dem Abstand einer Abweichung zuzuweisen und eine Nachricht an eine Human Interface Device zu senden, welche Beschädigung zu erwarten ist.

7. Riemenantriebssystem nach den vorstehenden Ansprüchen, wobei der Riemen (10) ein Zahnriemen ist und die Rollen (12) Zahnräder sind.

8. Riemenantriebssystem nach den vorstehenden Ansprüchen, wobei das Signalelement (16) ein optisches Element, ein magnetisches Element, ein induktives Element, ein kapazitives Element oder ein mechanisches Element ist und wobei die mindestens zwei Detektorelemente (18,20) optische Detektoren, magnetische Detektoren, induktive Detektoren, kapazitive Detektoren bzw. mechanische Detektoren sind.

9. Riemenantriebssystem nach den Ansprüchen 1 bis 8, wobei das Signalelement (16) eine optische dichte Folie ist und die Detektorelemente photoelektrische Schranken sind, wobei das Signalelement (16) und die Detektoren bezogen aufeinander so angeordnet sind, dass die Folie den Lichtstrahl der jeweiligen photoelektrischen Schranke beim Passieren unterbricht.

10. Riemenantriebssystem (1) nach Anspruch 9, wobei die optische dichte Folie eine Vertiefung umfasst, sodass die Lichtschranke der photoelektrischen Schranke die Vertiefung passieren kann, wenn die Signalelemente (16) die Detektorelemente (18,20) passieren.

11. Riemenantriebssystem (1) nach den vorstehenden Ansprüchen, wobei das zweite Detektorelement (20) bezogen auf das Signalelement so angeordnet ist, dass das Signalelement das zweite Detektorelement während mindestens 30 % oder mindestens 50 % oder mindestens 70 % oder mindestens 90 % aller erwarteten Bewegungen von einem Start bis zu einem Stopp des Riemens (10) passiert.

12. Dreiachsige Greifvorrichtung, umfassend ein Riemenantriebssystem (1) nach den vorstehenden Ansprüchen, wobei das Riemenantriebssystem (1) eine Bewegung in der Achse aus einer und in eine Ebene ermöglicht, wobei ein Zweitachse-Antriebssystem (50) eine Bewegung des Greifers (54) in der zweiten Achse ermöglicht und ein Drittachse-Antriebssystem (52) eine Bewegung des Greifers (54) in einer dritten Achse ermöglicht.

13. Verfahren zur Überwachung eines Riemenantriebssystems (1), das mit einem Greifer verbunden ist, wobei das Riemenantriebssystem (1) einen Rahmen, eine Antriebswelle, die mit einem Motor verbunden ist, eine Steuerung, eine Abtriebswelle und zwei Rollen, die mit der Abtriebswelle bzw. Antriebswelle verbunden sind, und einen Riemen umfasst, wobei der Rahmen die Antriebswelle und Abtriebswelle so trägt, dass der Riemen an den Rollen angebracht ist, wobei ein Signalelement so an dem Riemen angebracht ist, dass das Signalelement mit dem Riemen angetrieben wird, wobei mindestens zwei Detektorelemente so an dem Rahmen angebracht sind, dass das Signalelement die Detektorelemente passieren kann, wodurch ein Signal durch das Passieren erzeugt wird, wobei die Detektorelemente mit der Steuerung verbunden sind, wobei die Steuerung den Motor so steuert, dass sich der Riemen bei einem Startbetrieb des Riemenantriebssystems (1) bewegt, bis das Signalelement ein Signal in einem ersten Detektorelement von den mindestens zwei Detektorelementen erzeugt, um einen Raumnullpunkt der Riemenbewegung festzulegen, der einen Raumreferenzpunkt bestimmt, der einer Parkposition des Greifers entspricht, wobei das Signal eines zweiten Detektorelements dazu verwendet wird, den Raumnullpunkt während eines normalen Betriebes des Riemenantriebs zu überprüfen, wobei das Signalelement das erste Detektorelement während eines normalen Betriebes nicht passieren wird,
wobei die Steuerung die Bewegung des Riemens (10) automatisch auf den realen Raumpunkt relativ zu dem korrigierten Raumnullpunkt korrigiert, wenn das Signal des zweiten Detektors eine Differenz zu dem erwarteten Raumnullpunkt angibt.

14. Verfahren nach dem vorstehenden Anspruch, wobei die Steuerung aus dem Signal des zweiten Detektors einen oder mehrere Parameter aus der Liste der Folgenden abweicht:
Anzahl von Abweichungen, Abstand von Abweichungen, Zeitintervall von Abweichungen, wobei die Steuerung unter Nutzung dieser Parameter eine Schwere der Abweichung bestimmt.

## Revendications

1. Système d'entraînement par courroie, pour entraîner une courroie (10), comprenant un cadre, un arbre d'entraînement (13) relié à un moteur (40), un dispositif de commande (30), un arbre entraîné (14) et deux poulies (12) reliées respectivement à l'arbre entraîné (14) et à l'arbre d'entraînement (13), un préhenseur et une courroie (10), dans lequel le cadre supporte l'arbre d'entraînement (13) et l'arbre entraîné (14) de sorte que la courroie (10) est montée sur les poulies (12), dans lequel un élément de signal (16) est monté sur la courroie (10) de sorte que l'élément de signal (16) bouge avec la courroie (10), dans lequel au moins deux éléments de détection (18,20) sont montés au niveau de positions connues au niveau du cadre de sorte que l'élément de signal (16) peut passer par les éléments de détection (18,20) pour générer un signal en y passant, dans lequel les éléments de détection (18,20) sont reliés au dispositif de commande (30), dans lequel le système d'entraînement par courroie est relié à un préhenseur, dans lequel le dispositif de commande (30) est conçu pour commander le moteur (40) caractérisé de sorte que dans une opération de démarrage du système d'entraînement par courroie la courroie (10) est conçue pour bouger jusqu'à ce que l'élément de signal génère un signal dans un premier élément de détection (18) parmi les au moins deux éléments de détection pour fixer un point zéro dans l'espace de mouvement de la courroie qui détermine un point de référence dans l'espace correspondant à une position d'arrêt du préhenseur, de sorte que, pendant le fonctionnement normal, l'élément de signal ne passera pas par le premier élément de détection, dans lequel le dispositif de commande (30) est conçu pour recevoir et utiliser le signal d'un second élément de détection (20) pour vérifier le point zéro dans l'espace pendant le fonctionnement normal du système d'entraînement par courroie, dans lequel le dispositif de commande (30) est conçu pour corriger automatiquement le mouvement de la courroie (10) jusqu'au point réel dans l'espace par rapport au point zéro corrigé dans l'espace, si le signal du second élément de détection (20) indique une différence par rapport au point zéro attendu dans l'espace.

2. Système d'entraînement par courroie selon la revendication précédente, dans lequel le dispositif de commande (30) est conçu pour compter le nombre de déviations du point zéro et pour envoyer un message à un dispositif interactif humain lorsque le nombre dépasse une valeur seuil.

3. Système d'entraînement par courroie selon les revendications précédentes, dans lequel le dispositif de commande (30) est conçu pour déterminer des distances de déviation et additionner les distances et pour envoyer un message à un dispositif d'interface humaine lorsque la somme des déviations dépasse une valeur seuil spécifiée.

4. Système d'entraînement par courroie selon les revendications précédentes, dans lequel le dispositif de commande (30) est conçu pour déterminer le nombre de déviations et la distance de déviation et le temps entre l'occurrence des déviations et pour envoyer un message à un dispositif d'interface humaine lorsque le temps entre l'occurrence de déviations avec une distance spécifiée descend en dessous d'une valeur seuil.

5. Système d'entraînement par courroie selon la revendication 4 comprenant une base de données, dans lequel la base de données est reliée au dispositif de commande (30) pour sauvegarder le nombre des occurrences des déviations, le temps entre l'occurrence de déviations et la distance de déviation, dans lequel le système d'entraînement par courroie comprend en outre une interface conçue pour ajouter des paramètres du système d'entraînement dans la base de données, en particulier des paliers, des arbres, des éléments de cadre et/ou de la courroie utilisée après avoir été démontés des poulies et examinés par rapport à un ou plusieurs des paramètres de la liste suivante : l'usure, l'élasticité, l'allongement à la rupture, la résistance à la traction, dans lequel le dispositif de commande (30) est conçu pour calculer un moment donné d'entretien optimisé en tenant compte des données stockées dans la base de données.

6. Système d'entraînement par courroie selon la revendication précédente, dans lequel le dispositif de commande (30) est conçu pour attribuer des dommages spécifiques de la courroie (10) à des valeurs spécifiques de l'occurrence de déviations, du temps entre l'occurrence de déviations et de la distance de déviation, et pour envoyer un message à un dispositif d'interface humaine quel dommage est à attendre.

7. Système d'entraînement par courroie selon les revendications précédentes dans lequel la courroie (10) est une courroie dentée et les poulies (12) sont des roues d'engrenage.

8. Système d'entraînement par courroie selon les revendications précédentes, dans lequel l'élément de signal (16) est un élément optique, un élément magnétique, un élément inductif, un élément capacitif ou un élément mécanique et dans lequel les au moins deux éléments de détection (18,20) sont respectivement des détecteurs optiques, des détecteurs magnétiques, des détecteurs inductifs, des détecteurs capacitifs ou des détecteurs mécaniques.

9. Système d'entraînement par courroie selon les revendications 1 à 8 dans lequel l'élément de signal (16) est une feuille optique opaque et les éléments de détection sont des barrières photoélectriques dans lequel l'élément de signal (16) et les détecteurs sont agencés les uns par rapport aux autres de sorte que la feuille interrompt le faisceau lumineux de la barrière photoélectrique correspondante lorsqu'il y passe.

10. Système d'entraînement par courroie (1) selon la revendication 9 dans lequel la feuille optique opaque comprend un évidement de sorte que la barrière lumineuse de la barrière photoélectrique peut traverser l'évidement lorsque les éléments de signal (16) traverse les éléments de détection (18,20).

11. Système d'entraînement par courroie (1) selon les revendications précédentes, dans lequel le second élément de détection (20) est agencé par rapport à l'élément de signal de sorte que l'élément de signal traverse le second élément de détection pendant au moins 30 % ou au moins 50 % ou au moins 70 % ou au moins 90 % de tous les mouvements attendus d'un démarrage à un arrêt de la courroie (10).

12. Dispositif de préhension à trois axes comprenant un système d'entraînement par courroie (1) selon les revendications précédentes, dans lequel le système d'entraînement par courroie (1) assure le mouvement dans l'axe à l'extérieur et à l'intérieur d'un plan dans lequel un système d'entraînement (50) suivant un deuxième axe fournit le mouvement du préhenseur (54) dans le deuxième axe et un système d'entraînement (52) suivant un troisième axe assure le mouvement du préhenseur (54) dans un troisième axe.

13. Procédé de surveillance d'un système d'entraînement par courroie (1) relié à un préhenseur, dans lequel le système d'entraînement par courroie (1) comprend un cadre, un arbre d'entraînement relié à un moteur, un dispositif de commande, un arbre entraîné et deux poulies reliées respectivement à l'arbre entraîné et à l'arbre d'entraînement, et une courroie, dans lequel le cadre supporte l'arbre d'entraînement et l'arbre entraîné de sorte que la courroie est montée sur les poulies, dans lequel un élément de signal est monté sur la courroie de sorte que l'élément de signal entraîne avec la courroie, dans lequel au moins deux éléments de détection sont montés au niveau du cadre de sorte que l'élément de signal peut passer par les éléments de détection pour générer un signal en y passant, dans lequel les éléments de détection sont reliés au dispositif de commande, dans lequel le dispositif de commande commande le moteur de sorte que dans une opération de démarrage du système d'entraînement par courroie (1) la courroie bouge jusqu'à ce que l'élément de signal génère un signal dans un premier élément de détection parmi les au moins deux éléments de détection pour fixer un point zéro dans l'espace du mouvement de la courroie qui détermine un point de référence dans l'espace correspondant à une position de stationnement du préhenseur, dans lequel le signal d'un second élément de détection est utilisé pour vérifier le point zéro dans l'espace pendant le fonctionnement normal de l'entraînement par courroie, dans lequel pendant le fonctionnement normal l'élément de signal ne passera pas par la premier élément de détection, dans lequel le dispositif de commande corrige automatiquement le mouvement de la courroie (10) jusqu'au point réel dans l'espace par rapport au point zéro corrigé dans l'espace, si le signal du second détecteur indique une différence par rapport au point zéro attendu dans l'espace.

14. Procédé selon la revendication précédente, dans lequel le dispositif de commande dévie du signal du second détecteur un ou plusieurs paramètres de la liste suivante : le nombre de déviations, la distance de déviations, l'intervalle de temps de déviations, dans lequel le dispositif de commande détermine la gravité de la déviation en utilisant ces paramètres.
